# EUROPEAN PATENT APPLICATION

(11) **EP 4 528 415 A1**
(43) Date of publication of application: **26.03.2025**
(21) Application number: 22951626.5
(22) Date of filing: 22.07.2022
(51) Int. Cl.: G05B 23/02, G06F 13/38

(54) **MULTI-CONTROLLER SYSTEM AND CODING METHOD THEREFOR, AND ELECTRIC APPARATUS AND CONTROL DEVICE**

(71) Applicant: Contemporary Amperex Technology Co., Limited, Ningde, Fujian 352100 (CN)
(72) Inventor: CHEN, Xinwei, Ningde, Fujian 352100 (CN); YAN, Yu, Ningde, Fujian 352100 (CN); LI, Xiangtao, Ningde, Fujian 352100 (CN); DAN, Zhimin, Ningde, Fujian 352100 (CN); HUANG, Tianyi, Ningde, Fujian 352100 (CN); SUN, Weiping, Ningde, Fujian 352100 (CN)
(74) Representative: Ran, Handong
(86) International application number: PCT/CN2022/107520
(87) International publication number: WO 2024/016357

(57) **Abstract**

Provided in the present application are a multi-controller system and a coding method therefor, and an electric apparatus, a control device, a computer-readable storage medium and a computer program product. The multi-controller system comprises a master controller, first slave controllers and second slave controllers, wherein the master controller is connected to the first slave controllers by means of a first trigger signal line, and the first slave controllers are connected to the second slave controllers by means of a second trigger signal line. The master controller is configured to send a first trigger signal to the first slave controllers by means of the first trigger signal line and code the first slave controllers; and each first slave controller is configured to send, in response to receiving the first trigger signal, a second trigger signal to a second slave controller by means of the second trigger signal line, such that the second slave controller can be coded.

## Description

### Technical Field

The present application relates to the technical field of automatic control and batteries, and in particular to a multi-controller system and a coding method thereof, an electrical apparatus, a control device, a computer-readable storage medium, and a computer program product.

### Background

In a multi-controller system such as a battery management system (BMS), there are usually a master controller and a plurality of slave controllers. In order to ensure normal communication between the master controller and the slave controllers, it is necessary to code the plurality of slave controllers.

In some cases, the slave controllers are pre-coded through software and codes are written into the slave controllers, to define the slave controllers as different ones. In this way, the code needs to be written into each slave controller separately before the slave controller leaves the factory, which is tedious in process. Moreover, the plurality of slave controllers that are distinguished by pre-coding are easily confused during transportation and installation, resulting in failure to normal operation of the system, so that the requirements for transportation and installation performed by workers are also very high.

### Summary of the Invention

The present application is intended to at least solve one of the technical problems existing in the prior art. Therefore, an objective of the present application is to provide a multi-controller system and a coding method thereof, an electrical apparatus, a control device, a computer-readable storage medium and a computer program product, so as to improve a coding mode of the multi-controller system.

Embodiments in a first aspect of the present application provide a multi-controller system, the multi-controller system including a master controller, a first slave controller and a second slave controller, wherein the master controller is connected to the first slave controller through a first trigger signal line, and the first slave controller and the second slave controller are connected through a second trigger signal line; the master controller is configured to: send a first trigger signal to the first slave controller through the first trigger signal line, and code the first slave controller; the first slave controller is configured to: send a second trigger signal to the second slave controller through the second trigger signal line in response to receiving the first trigger signal, so that the second slave controller is able to be coded.

According to the multi-controller system provided by the embodiments of the present application, on the one hand, the coding of the slave controllers is performed after the multi-controller system is assembled and powered on, with no need to pre-code the slave controllers, which reduces the difficulty in production, transportation, after-sales and management of the slave controllers, and does not need to worry about the confusion of the slave controllers during transportation and installation; on the other hand, after the first trigger signal is received from the first slave controller, the second trigger signal is sent from the first slave controller to the second slave controller using the second trigger signal line between the first slave controller and the second slave controller, so that the second slave controller is able to be coded, which saves coding interfaces and coding harness additionally configured for the second slave controller, reduces the number of nodes for coding control, improves the robustness of a whole coding system, and improves the reliability of the system.

In some embodiments, the first slave controller or the master controller is further configured to: code the second slave controller in response to the completion of the coding of the first slave controller.

In these embodiments, the second slave controller is coded after the coding of the first slave controller is completed. In this case, the second slave controller is able to be coded under the control of the first slave controller, and is able to be coded in response to code information. Moreover, the first slave controller is coded via the master controller, and then the second slave controller connected to this first slave controller is coded after the coding of the first slave controller is completed, which is able to avoid a code error and save procedures.

In some embodiments, the multi-controller system includes a plurality of first slave controllers and a plurality of second slave controllers, the plurality of first slave controllers and the plurality of second slave controllers being in one-to-one correspondence, and the first slave controllers and the second slave controllers in one-to-one correspondence being connected through the second trigger signal lines.

According to the design of these embodiments, the plurality of first slave controllers and the plurality of second slave controllers are in one-to-one correspondence, which is able to ensure that after receiving the first trigger signal, each first slave controller is able to only control one second slave controller and enable this second slave controller to be coded, thereby preventing the first slave controller from controlling the plurality of second slave controllers at the same time, enabling the plurality of second slave controllers to be in a codable state at the same time, resulting in code confusion or errors of the second slave controllers.

In some embodiments, the plurality of first slave controllers are further configured to send a third trigger signal to the plurality of second slave controllers through the second trigger signal line in response to receiving a coding start instruction, so that the second slave controllers are unable to be coded.

In these embodiments, all the second slave controllers are controlled to be unable to receive coding-related signals and perform coding operations at the initial stage of coding. In this way, each second slave controller is able to be sequentially controlled through the second trigger signal to be able to coded, and then the plurality of second slave controllers are able to be prevented from being in the codable state at the same time, resulting in code confusion.

In some embodiments, the master controller is connected to one first slave controller through the first trigger signal line, and the other first slave controllers are sequentially connected in series to the one first slave controller through the first trigger signal line; the master controller is further configured to send a first trigger signal to the one first slave controller through the first trigger signal line; the first slave controller is further configured to: send the first trigger signal to the next first slave controller connected in series thereto in response to the completion of the coding of the corresponding second slave controller.

In the above coding mode, the master controller is able to trigger the start of an entire coding program only by sending the first trigger signal to one first slave controller, and then after the coding of each first slave controller is completed, the coding program of the next first slave controller connected thereto is able to be sequentially triggered, so that the plurality of first slave controllers are able to be coded sequentially. This coding control mode saves the coding harness and the coding interfaces of the master controller, reduces the number of the nodes for coding control, improves the reliability of the system, and makes the configurations of all the first slave controllers more consistent, which is convenient for preparation, transportation and assembly of the first slave controllers.

In some embodiments, the master controller is connected to the first slave controller through a communication line; the master controller is further configured to send a coding start instruction to the first slave controller through the communication line before sending the first trigger signal, to control the first slave controller to enter a silent state.

In these embodiments, all the first slave controllers are controlled to enter the silent state at the initial stage of coding, so that the first slave controllers are unable to receive coding-related signals and perform coding operations. In this way, at the beginning of a coding stage, the first slave controller is able to be controlled by the first trigger signal to start the coding operation. In addition, each first slave controller, after completing the coding, is able to trigger the next first slave controller to start the coding operation, so that the plurality of first slave controllers are able to be sequentially triggered and coded, and then the plurality of first slave controllers are able to be prevented from being in a codable state at the same time, resulting in code confusion.

In some embodiments, the first slave controller is further configured to: send a third trigger signal to the corresponding second slave controller through the second trigger signal line in response to the completion of the coding of the second slave controller, so that the second slave controller is unable to be coded.

In these embodiments, each second slave controller, after completing the coding, is controlled and unable to be coded, so that after the next second slave controller is triggered by the second trigger signal, only this second slave controller is in a codable state, thereby ensuring that only one second slave controller is in the codable state under the control of the first trigger signal every time, and avoiding the confusion of code information of the different second slave controllers.

**In** some embodiments, the first slave controller is further configured to: send a first coding request instruction to the master controller in response to receiving the first trigger signal, the first coding request instruction including an existing code of the first slave controller; the master controller is configured to: confirm whether the existing code in the first coding request instruction is consistent with a code currently configured for the first slave controller in response to receiving the first coding request instruction, and send a code confirmation instruction to the first slave controller in response to the consistency between the existing code and the currently configured code; the first slave controller is further configured to: determine the existing code as the code of the first slave controller in response to receiving the code confirmation instruction.

**In** the above coding mode, the first slave controller first actively sends the existing code to the master controller for confirmation, the master controller confirms whether the existing code is consistent with the currently configured code, and if the codes are consistent, the master controller no longer sends a code information instruction to endow the first slave controller with a code, and is able to directly send the code confirmation instruction to the first slave controller, which saves procedures. Moreover, by comparing and verifying whether the existing code is consistent with the currently configured code, a code error is able to be avoided.

**In** some embodiments, the master controller is configured to: send the code currently configured for the first slave controller to the first slave controller in response to the inconsistency between the existing code and the currently configured code; the first slave controller is further configured to: send a second coding request instruction to the master controller in response to receiving the code currently configured for the first slave controller, the second coding request instruction including the code currently configured for the first slave controller. By repeatedly sending the coding request instruction to the master controller to confirm the code, the probability of the code error is able to be reduced and the accuracy of the code is able to be ensured.

In some embodiments, when the first slave controller is further configured to code the second controller in response to the completion of the coding of the first slave controller, the first slave controller is further configured to: send a third coding instruction to the corresponding second slave controller in response to receiving the code confirmation instruction, the third coding instruction including a code configured for the second slave controller.

In these embodiments, the first slave controller, after completing the coding, sends the third coding instruction to the second slave controller. In this case, since only one second slave controller (the second slave controller corresponding to the first slave controller which completes the coding) is in a codable state, only this second slave controller is able to be coded in response to the third coding instruction, and code duplication of the different second slave controllers is able to be avoided.

In some embodiments, the second slave controller is configured to: store the code configured for the second slave controller in response to receiving the third coding instruction, and send feedback information to the corresponding first slave controller, the feedback information including a code currently stored by the second slave controller; the first slave controller is configured to: determine whether the code currently stored by the second slave controller is consistent with the code configured for the second slave controller in response to receiving the feedback information, and confirm that the coding of the second slave controller is completed in response to determining that the code currently stored by the second slave controller is consistent with the code configured for the second slave controller. In this way, by comparing and verifying, a code error is able to be avoided.

In some embodiments, the master controller is further configured to: add 1 to a coding count after sending the code confirmation instruction to the first slave controller, and confirm whether the coding count is greater than or equal to the number of the first slave controllers; and in response to the coding count greater than or equal to the number of the first slave controllers, send a coding exit instruction to the first slave controller through the first trigger signal line, and end the coding process.

These embodiments are able to judge whether the coding of all the first slave controllers is completed by confirming the coding count, continue to code the next first slave controller if the coding is not completed, and end the coding if so.

In some embodiments, the multi-controller system is a battery management system.

In some embodiments, the first slave controller is a branch battery management system, and the second slave controller is a balance controller.

Embodiments in a second aspect of the present application provide an electrical apparatus, the electrical apparatus including a battery and the multi-controller system according to any one of the foregoing, the battery being used to provide electric energy, and the multi-controller system being used to control and manage the battery.

Since the above design of the multi-controller system can bring about the above beneficial effects, the reliability of the electrical apparatus is significantly improved.

Embodiment in a third aspect of the present application provide a coding method of a multi-controller system, wherein the multi-controller system includes a master controller, a first slave controller and a second slave controller, the master controller is connected to the first slave controller through a first trigger signal line, and the first slave controller and the second slave controller are connected through a second trigger signal line; the method includes: sending, by the master controller, a first trigger signal to the first slave controller through the first trigger signal line, and coding the first slave controller; and sending, by the first slave controller, a second trigger signal to the second slave controller through the second trigger signal line in response to receiving the first trigger signal through the first trigger signal line, so that the second slave controller is able to be coded.

According to the coding method of the multi-controller system provided by the embodiments of the present application, on the one hand, the coding of the slave controllers is performed after the multi-controller system is assembled and powered on, with no need to pre-code the slave controllers, which reduces the difficulty in production, transportation, after-sales and management of the slave controllers, and does not need to worry about the confusion of the slave controllers during transportation and installation; on the other hand, after the first slave controller receives the first trigger signal, the first slave controller sends the second trigger signal to the second slave controller using the second trigger signal line between the first slave controller and the second slave controller, so that the second slave controller is able to be coded, which saves coding interfaces and coding harness additionally configured for the second slave controller, reduces the number of nodes for coding control, improves the robustness of a whole coding system, and improves the reliability of the system.

In some embodiments, the method further includes: coding the second controller by the first slave controller or the master controller in response to the completion of the coding of the first slave controller.

In these embodiments, the second slave controller is coded after the coding of the first slave controller is completed. In this case, the second slave controller is able to be coded under the control of the first slave controller, and is able to be coded in response to code information. Moreover, the first slave controller is coded via the master controller, and then the second slave controller connected to this first slave controller is coded after the coding of the first slave controller is completed, which is able to avoid a code error.

In some embodiments, the multi-controller system includes a plurality of first slave controllers and a plurality of second slave controllers, the plurality of first slave controllers and the plurality of second slave controllers being in one-to-one correspondence, and the first slave controllers and the second slave controllers in one-to-one correspondence being connected through second trigger signal lines; the method further includes: sending, by the plurality of first slave controllers, a third trigger signal to the plurality of second slave controllers through the second trigger signal lines in response to receiving a coding start instruction, so that the second slave controller is unable to be coded.

In these embodiments, the first slave controllers and the second slave controllers are in one-to-one correspondence, which is able to ensure that after receiving the first trigger signal, each first slave controller is able to only control one second slave controller to enable the second slave controller to be coded, thereby preventing the first slave controller from controlling the plurality of second slave controllers at the same time, enabling the plurality of second slave controllers to be in a codable state at the same time, resulting in code confusion or errors of the second slave controllers; moreover, all the second slave controllers are controlled to be unable to receive coding-related signals and perform coding operations at the initial stage of coding, so that each second slave controller is able to be sequentially controlled through the second trigger signal to be able to be coded, and then the plurality of second slave controllers are able to be prevented from being in the codable state at the same time, resulting in code confusion.

In some embodiments, the master controller is connected to one first slave controller through the first trigger signal line, and the other first slave controllers are sequentially connected in series to the one first slave controller through the first trigger signal line; the method further includes: sending, by the maser controller, a first trigger signal to one first slave controller through the first trigger signal line; and sending, by the first slave controller, a first trigger signal to the next first slave controller connected in series thereto in response to the completion of the coding of the corresponding second slave controller.

In the above coding mode, the master controller is able to trigger the start of an entire coding program only by sending the first trigger signal to one first slave controller, and then after the coding of each first slave controller is completed, the coding program of the next first slave controller connected thereto is able to be sequentially triggered, so that the plurality of first slave controllers are able to be coded sequentially. This coding control mode saves the coding harness and the coding interfaces of the master controller, reduces the number of the nodes for coding control, improves the reliability of the system, and makes the configurations of all the first slave controllers more consistent, which is convenient for preparation, transportation and assembly of the first slave controllers.

In some embodiments, the master controller is connected to the first slave controller through a communication line; the method further includes: sending, by the master controller, a coding start instruction to the first controller through the communication line before sending the first trigger signal, to control the first controller to enter a silent state.

In these embodiments, all the first slave controllers are controlled to enter the silent state at the initial stage of coding, so that the first slave controllers are unable to receive coding-related signals and perform coding operations. In this way, at the beginning of a coding stage, the first slave controller is able to be controlled by the first trigger signal to start the coding operation. In addition, each first slave controller, after completing the coding, is able to trigger the next first slave controller to start the coding operation, so that the plurality of first slave controllers are able to be sequentially coded, and then the plurality of first slave controllers are able to be prevented from being in a codable state at the same time, resulting in code confusion.

In some embodiments, the method further includes: sending, by the first slave controller, a third trigger signal to the corresponding second slave controller through the second trigger signal line in response to the completion of the coding of the second slave controller, so that the second slave controller is unable to be coded.

In these embodiments, each second slave controller, after completing the coding, is controlled and unable to be coded, so that after the next second slave controller is triggered by the second trigger signal, only this second slave controller is in a codable state, thereby ensuring that only one second slave controller is in the codable state under the control of the first trigger signal every time, and avoiding the confusion of code information of the different second slave controllers.

In some embodiments, sending, by the master controller, a first trigger signal to the first slave controller through the first trigger signal line, and coding the first slave controller includes the following steps: sending, by the first slave controller, a first coding request instruction to the master controller in response to receiving the first trigger signal, the first coding request instruction including an existing code of the first slave controller; confirming, by the master controller, whether the existing code in the first coding request instruction is accordant with a code currently configured for the first slave controller in response to receiving the first coding request instruction, and sending a code confirmation instruction to the first slave controller in response to the consistency between the existing code and the currently configured code; and determining, by the first slave controller, the existing code as the code of the first slave controller in response to receiving the code confirmation instruction.

In the above coding mode, the first slave controller first actively sends the existing code to the master controller for confirmation, the master controller confirms whether the existing code is consistent with the currently configured code, and if the codes are consistent, the master controller no longer sends a code information instruction to endow the first slave controller with a code, and is able to directly send the code confirmation instruction to the first slave controller, which saves procedures. Moreover, by comparing and verifying whether the existing code is consistent with the currently configured code, a code error is able to be avoided.

In some embodiments, sending, by the master controller, a first trigger signal to the first slave controller through the first trigger signal line, and coding the first slave controller further includes the following steps: sending, by the master controller, the code currently configured for the first slave controller to the first slave controller in response to the inconsistency between the existing code and the currently configured code; and sending, by the first slave controller, a second coding request instruction to the master controller in response to receiving the code currently configured for the first slave controller, the second coding request instruction including the code currently configured for the first slave controller. By repeatedly sending the coding request instruction to the master controller to confirm the code, the probability of the code error is able to be reduced and the accuracy of the code is able to be ensured.

In some embodiments, coding the second controller by the first slave controller in response to the completion of the coding of the first slave controller includes the following steps: sending, by the first slave controller, a third coding instruction to the corresponding second slave controller in response to receiving the code confirmation instruction, the third coding instruction including a code configured for the second slave controller.

In these embodiments, the first slave controller, after completing the coding, sends the third coding instruction to the second slave controller. In this case, since only one second slave controller (the second slave controller corresponding to the first slave controller which completes the coding) is in a codable state, only this second slave controller is able to be coded in response to the third coding instruction, and code duplication of the different second slave controllers is able to be avoided.

In some embodiments, coding the second controller by the first slave controller in response to the completion of the coding of the first slave controller further includes the following steps: storing, by the second slave controller, the code configured for the second slave controller in response to receiving the third coding instruction, and sending feedback information to the corresponding first slave controller, the feedback information including a code currently stored by the second slave controller; and determining, by the first slave controller, whether the code currently stored by the second slave controller is consistent with the code configured for the second slave controller in response to receiving the feedback information, and confirming that the coding of the second slave controller is completed in response to determining that the code currently stored by the second slave controller is consistent with the code configured for the second slave controller. In this way, by comparing and verifying, a code error is able to be avoided.

In some embodiments, the method further includes: adding, by the master controller, 1 to a coding count after sending code confirmation information to the first slave controller, and confirming whether the coding count is greater than or equal to the number of the first slave controllers; and in response to the coding count greater than or equal to the number of the first slave controllers, sending a coding exit instruction to the first slave controller through the first trigger signal line, and ending the coding process.

These embodiments are able to judge whether the coding of all the first slave controllers is completed by confirming the coding count, continue to code the next first slave controller if the coding is not completed, and end the coding if so.

Some embodiments in a fourth aspect of the present disclosure provide a control device, including a memory, a processor, and a program stored on the memory and operable on the processor, and when the processor executes the program, the coding method of a multi-controller system according to any one of the foregoing being implemented.

Some embodiments in a fifth aspect of the present disclosure provide a computer-readable storage medium on which a computer program is stored, wherein when the computer program is executed by the processor, the coding method of a multi-controller system according to any one of the foregoing is implemented.

Some embodiments in a sixth aspect of the present disclosure provide a computer program product, including a computer program, wherein when the computer program is executed by a processor, the coding method of a multi-controller system according to any one of the foregoing is implemented.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### Description of Drawings

In the drawings, unless otherwise specified, like reference numerals indicate like or similar parts or elements throughout multiple drawings. These drawings are not necessarily drawn to scale. It should be understood that these drawings describe only some embodiments disclosed according to the present application, and should not be regarded as a limitation to the scope of the present application.
Fig. 1 is a schematic structural diagram of a multi-controller system according to some embodiments of the present disclosure;
Fig. 2 is a schematic structural diagram of a multi-controller system according to some other embodiments of the present disclosure;
Fig. 3 is a schematic diagram of a combined structure of a battery energy storage system and a battery management system according to some embodiments of the present disclosure;
Fig. 4 is a schematic structural diagram of an electrical apparatus according to some embodiments of the present disclosure;
Fig. 5 is a flowchart of a coding method of a multi-controller system according to some embodiments of the present disclosure;
Fig. 6 is a flowchart of a coding method of a multi-controller system according to some other embodiments of the present disclosure;
Fig. 7 is a flowchart of some steps in a coding method of a multi-controller system according to some embodiments of the present disclosure;
Fig. 8 is a flowchart of some steps in a coding method of a multi-controller system according to some other embodiments of the present disclosure; and
Fig. 9 is a logical flowchart of a coding method of a multi-controller system according to some embodiments of the present disclosure.

### Detailed Description

Examples of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that front and rear associated objects are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount","join", "connect", "fix", etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

A battery management system (BMS) is mainly used to manage and maintain each battery unit, prevent the battery from overcharging and overdischarging, prolong the service life of the battery, and monitor the state of the battery. The battery management system is a multi-controller system, which usually has a master controller and a plurality of slave controllers, the master controller communicating with each slave controller through a controller area network (CAN). The master controller can be used to collect information from each slave controller, control actions of a relay in a battery energy distribution unit (BDU), monitor the various states of the battery, and ensure the safe use of the battery during charging and discharging, and can also communicate with electrical equipment such as a whole vehicle through a low-voltage electrical interface; the slave controller can be used to monitor information such as the unit voltage and unit temperature of a single branch, transmit the information to the master controller, and control charging and discharging processes of the branch circuit, and has a battery balance function.

Since the slave controllers generally have same hardware, in order to ensure the normal operation of CAN communication, it is necessary to identify the codes of the slave controllers before the system runs, so that correct CAN IDs can be generated for CAN communication. How to code the plurality of slave controllers correctly is a key to ensure normal operation of the system. In addition, for code configuration of the slave controllers, it is also necessary to consider that in an after-sales maintenance market, if there is an exchange or replacement of the slave controller, the system should also operate normally.

In some cases, software of the slave controllers is pre-coded and codes are written into the slave controllers, to define the slave controllers as different ones, and the slave controllers with same appearance are identified through labels. This scheme has the following problems: 1) the slave controllers have the same appearance, and only the software thereof is different, which is easy to cause confusion during transportation and installation, resulting in failure to normal operation of the system; 2) in terms of inventory management, it is necessary to identify and manage the slave controllers with the same appearance, which greatly increases the management difficulty, and also brings about an increase in the management cost; 3) in terms of the after-sales market, the software of the slave controllers is different and cannot be interchanged, which will increase the maintenance difficulty. For example, after the slave controllers are installed, the positions of the slave controllers may be wrong, it will take a lot of manpower to identify and replace the slave controllers.

Based on the above considerations, in order to improve the reliability of the multi-controller system such as the battery management system, the applicants, after in-depth research, provides a multi-controller system and a coding method thereof, an electrical apparatus, a control device, and a computer-readable storage medium.

The multi-controller system disclosed in the embodiments of the present disclosure may be, but not limited to, the battery management system, for example, may, but is not limited to, cooperate with a power battery or an energy storage battery to be applied to the electrical apparatus. Application scenarios of the multi-controller system include but are not limited to vehicles, ships, aircrafts, spacecraft, electric tools, electric toys, various mobile terminals, solar power generation systems, hydropower generation systems, wind power generation systems, and so on.

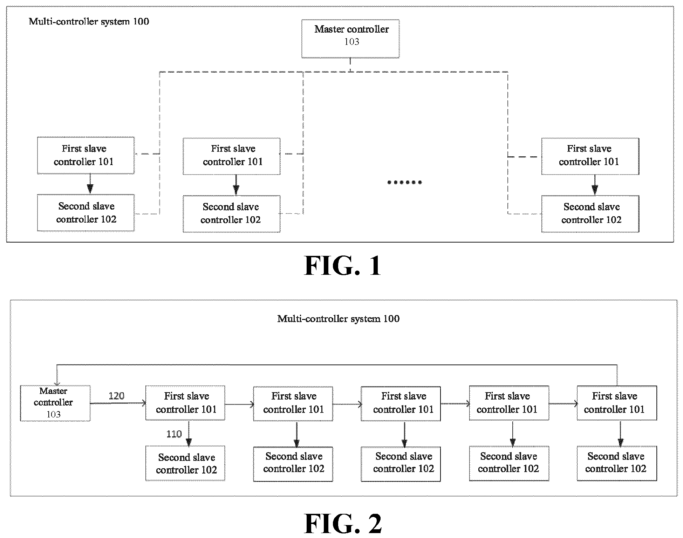

Some embodiments in a first aspect of the present disclosure provide a multi-controller system 100, as shown in Fig. 1 and Fig. 2, which are schematic structural diagrams of the multi-controller system 100 provided by some embodiments of the present disclosure. As shown in Fig. 1 and Fig. 2, the multi-controller system 100 includes a master controller 103, a first slave controller 101 and a second slave controller 102, the master controller 103 being connected to the first slave controllers 101 through a first trigger signal line 120, the first slave controller 101 and the second slave controller 102 being connected through a second trigger signal line 110.

In some embodiments the present disclosure, the multi-controller system 100 is a battery management system, which may cooperate with a power battery or an energy storage battery to be applied to an electrical apparatus.

In some embodiments of the present disclosure, the battery management system includes a master controller 103 (MBMU) and a plurality of slave controllers, and the plurality of slave controllers include first slave controllers 101 and second slave controllers 102, the first slave controllers 101 being branch battery management systems (SBMU), and the second slave controllers 102 being balance controllers (DCDC); the branch battery management systems are mainly used to collect information such as unit voltage and unit temperature of single branches and control charging and discharging processes of the single branches; the balance controllers (DCDC) are mainly used to control and adjust currents of the single branches; furthermore, the branch battery management systems are connected to the balance controllers through second trigger signal lines 110, and the branch battery management systems are further used to control the balance controllers to wake up or sleep through the second trigger signal lines 110.

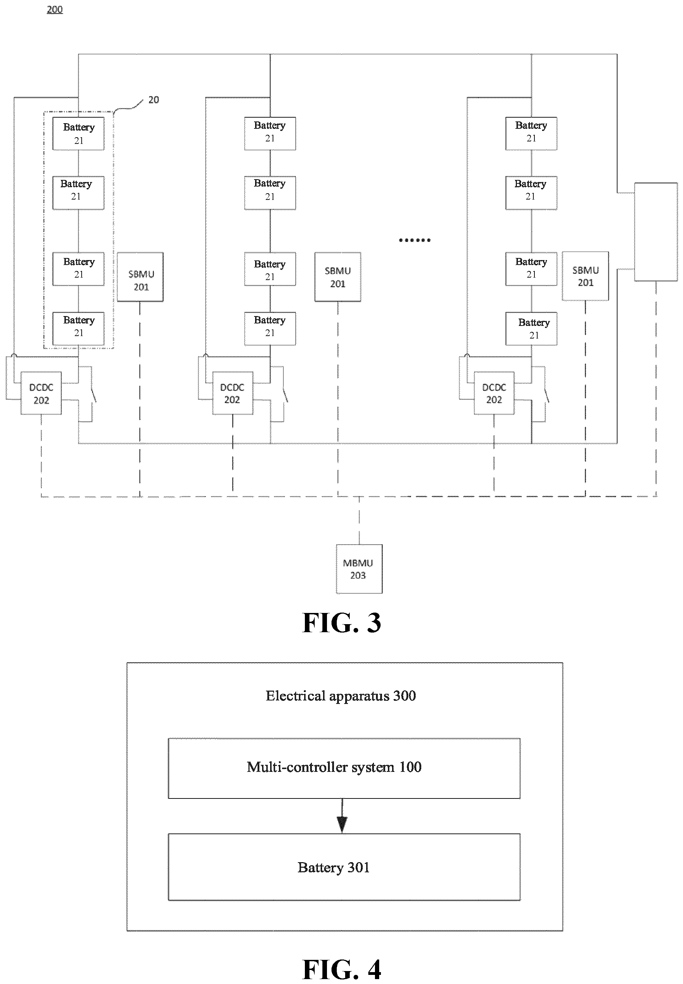

For example, as shown in FIG. 3, which is a schematic diagram of a combined structure 200 of a battery energy storage system and a battery management system according to some embodiments of the present disclosure, wherein the battery energy storage system includes a plurality of branch battery units 20, and each branch battery unit 20 includes a cluster of batteries 21; the battery management system includes a master controller (MBMU) 203, branch battery management systems (SBMU) 201 corresponding to the branch battery units 20 one to one, and balance controllers (DCDC) 202 corresponding to the branch battery units 20 one to one, each SBMU 201 is used to collect the information such as the voltage of the batteries 21 and the temperature of the batteries 21 of the corresponding single branch battery unit 20 and control the charging and discharging of the branch battery unit 20; each DCDC 202 is used to control and adjust the current of the corresponding single branch battery unit 20, wherein the SBMU 201 and the DCDC 202 corresponding to the same branch battery unit 20 are connected through a second trigger signal line, and the SBMU 201 is configured as a first slave controller, the DCDC 202 is configured as a second slave controller.

Some embodiments in a second aspect of the present disclosure provide an electrical apparatus, as shown in Fig. 4, which is a schematic structural diagram of an electrical apparatus 300 provided by some embodiments of the present disclosure. The electrical apparatus includes a battery 301 and a multi-controller system 100 according to any one of the foregoing, the battery 301 being used to provide electric energy, and the multi-controller system 100 being used to control and manage the battery 301. Due to the high reliability of the multi-controller system 100 for managing the battery 301 in the electrical apparatus, the reliability of the electrical apparatus is significantly improved.

The electrical apparatus in these embodiments may be, but is not limited to a vehicle, a ship, an aircraft, a spacecraft, an electric tool, an electric toy, various mobile terminals, a solar power generation system, a hydropower generation system, a wind power generation system, and so on.

Referring to Fig. 1 and Fig. 2, according to the multi-controller system 100 provided by the embodiment of the present disclosure, the configurations and communication methods of the master controller 103, the first slave controller 101, and the second slave controller 102 are illustrated below.

According to some embodiments of the present application, the master controller 103 is configured to: send a first trigger signal to the first slave controller 101 through the first trigger signal line 120, and code the first slave controller 101; the first slave controller 101 is configured to: send a second trigger signal to the second slave controller 102 through the second trigger signal line 110 in response to receiving the first trigger signal, so that the second slave controller 102 can be coded.

The second trigger signal line 110 is a signal line for transmitting control signals, specifically for transmitting the second trigger signal and a third trigger signal; in response to the second trigger signal, the second controller 102 can be coded, and in response to the third trigger signal, the second controller 102 cannot be coded. In the multi-controller system 100 of this embodiment, the first slave controller 101 and the second slave controller 102 have a control relationship therebetween, specifically, the first slave controller 101 can control the second slave controller 102 through the second trigger signal line 110, so that the second slave controller 102 can be coded or cannot be coded. In some embodiments, the second trigger signal line 110 is a hard line; the second trigger signal may be of a high level/low level, correspondingly, the third trigger signal may be of a low level/high level; the first slave controller 101 controls whether the second slave controller 102 can or cannot be coded by loading a high level/a low level to the second trigger signal line 110.

In some embodiments, the second trigger signal line 110 may be a wake-up line. In this case, the second trigger signal is a wake-up signal, and in response to the second trigger signal, the second slave controller 102 is awakened and can receive code information for coding. Correspondingly, the third trigger signal is a sleep signal, and in response to the third trigger signal, the second slave controller 102 enters a sleep state and cannot receive the code information for coding.

In some other embodiments, the second trigger signal line 110 may be a power-on/off signal line. In this case, the second trigger signal is a power-on signal, and in response to the second trigger signal, the second slave controller 102 is powered on and can receive code information for coding. Correspondingly, the third trigger signal may be a power-off signal, and in response to the third trigger signal, the second slave controller 102 is powered off and cannot receive code information for coding.

In some other embodiments, the second trigger signal line 110 may be a coding line. In this case, the second trigger signal is a coding enabling signal, and in response to the second trigger signal, the second slave controller 102 can receive and respond to the code information for coding. Correspondingly, the third trigger signal is a coding disabling signal, and in response to the third trigger signal, the second slave controller 102 cannot receive the code information for coding.

The first trigger signal line 120 is a signal line for transmitting the first trigger signal. The first trigger signal is a signal for triggering a coding operation, and the slave controller starts the coding operation in response to receiving the first trigger signal. In some embodiments, the first trigger signal line 120 is a hard line. The first trigger signal may be a high-level or low-level signal transmitted through the first trigger signal line 120.

It should be noted that both the first trigger signal and the second trigger signal are only used to trigger the slave controller to be coded, and then it is necessary to use a communication line to transmit the code information to code the slave controller. For example, in these embodiments, the master controller 103 sends the first trigger signal through the first trigger signal line 120, so that the first slave controller 101 can be coded, and then the master controller 103 uses the code information transmitted through the communication line to code the first slave controller 101. The communication line may be, for example, a CAN network communication line, and the code information may be a message including a serial number of the slave controller.

According to the multi-controller system 100 of the embodiment of the present application, on the one hand, the coding of the slave controllers is performed after the multi-controller system 100 is assembled and powered on, with no need to pre-code the slave controllers, which reduces the difficulty in production, transportation, after-sales and management of the slave controllers, and does not need to worry about the confusion of the slave controllers during transportation and installation; on the other hand, after the first slave controller 101 receives the first trigger signal, the first slave controller 101 sends the second trigger signal to the second slave controller 102 using the second trigger signal line between the first slave controller 101 and the second slave controller 102, so that the second slave controller 102 can be coded, which saves coding interfaces and coding harness additionally configured for the second slave controller 102, reduces the number of nodes for coding control, improves the robustness of a whole coding system, and improves the reliability of the system.

In some embodiments, the first slave controller 101 is further configured to: code the second slave controller 102 in response to the completion of the coding of the first slave controller 101. Or, in some other embodiments, the master controller 103 is further configured to: code the second controller 102 in response to the completion of the coding of the first slave controller 101.

For example, in some embodiments, the master controller 103 communicates with the first slave controller 101 and the second slave controller 102 through a CAN network; exemplarily, the communication process of the first slave controller 101 or the master controller 103 coding the second slave controller 102 can be realized through CAN network communication. In addition, the communication process of the master controller 103 coding the first slave controller 101 can also be realized through CAN network communication.

The first slave controller 101 starts coding after receiving the first trigger signal and sends the second trigger signal through the second trigger signal line 110, so that the second slave controller 102 can be coded. The code information is sent to the second slave controller 102 after the coding of the first slave controller 101 is completed. In this case, the second slave controller 102 is already in a codable state and can be coded in response to the code information. In addition, the first slave controller 101 is coded via the master controller 103, and the second slave controller 102 is coded after the coding of the first slave controller 101 is completed, which can avoid a code error and save procedures. For example, if the coding of the first slave controller 101 fails, the second slave controller 102 will not be coded, and in this case, the coding may be directly ended or may be restarted. In this way, a code error of the second slave controller 102 can be avoided, and saves processes.

In some embodiments, the multi-controller system includes a plurality of first slave controllers 101 and a plurality of second slave controllers 102, the plurality of first slave controllers 101 and the plurality of second slave controllers 102 being in one-to-one correspondence, and the first slave controllers 101 and the second slave controllers 102 in one-to-one correspondence being connected through the second trigger signal lines 110.

The first slave controllers 101 and the second slave controllers 102 are in one-to-one correspondence, which can ensure that after receiving the first trigger signal, each first slave controller 101 can only control one second slave controller 102 to enable this second slave controller 102 to be coded, thereby preventing the first slave controller 101 from controlling the plurality of second slave controllers 102 at the same time, enabling the plurality of second slave controllers 102 to be in a codable state at the same time, resulting in code confusion or code error of the second slave controllers 102.

In some embodiments, the master controller 103 is connected to one first slave controller 101 of the plurality of first slave controllers 101 through the first trigger signal line 120, and the other first slave controllers 101 are sequentially connected in series to the one first slave controller 101 through the first trigger signal line 120. In this way, coding harness and coding interfaces of the master controller 103 can be saved, the number of nodes for coding control can be reduced, the reliability of the system can be improved, and the configurations of all the first slave controllers 101 can be more consistent, which is convenient for preparation, transportation and assembly of the first slave controllers 101.

In some embodiments, the master controller 103 is configured to send a first trigger signal to one first slave controller 101 connected thereto through the first trigger signal line 120, and the first slave controller 101 is configured to send the first trigger signal to the next first slave controller 101 connected in series thereto in response to the completion of the coding of the corresponding second slave controller 102.

In these embodiments, the master controller 103 can trigger the starting of a whole coding program by only sending the first trigger signal to one first slave controller 101, and then after the coding of each first slave controller 101 is completed, the coding program of the next first slave controller 101 connected thereto can be sequentially triggered, so that the plurality of first slave controllers 101 can be coded in sequence. This coding control method saves the coding harness and the coding interfaces of the master controller 103, reduces the number of nodes for coding control, improves the reliability of the system, and makes the configurations of all the first slave controllers 101 more consistent, which is convenient for preparation, transportation and assembly of the first slave controllers 101.

For example, as shown in Fig. 1 and Fig. 2, a multi-controller system 100 includes a master controller 103, m first slave controllers 101, and m second slave controllers 102, wherein m is greater than and equal to 2; the first slave controllers 101 and the second slave controllers 102 are in one-to-one correspondence, and the corresponding first slave controller 101 and second slave controller 102 are connected through a second trigger signal line 110, wherein the master controller 103 and the first one of the first slave controllers 101, as well as the n-th first slave controller 101 and the (n+1)-th first slave controller 101 are connected through first trigger signal lines 120, wherein n is greater than or equal to 1 and less than or equal to m-1, the first trigger signal line 120 is used to send/receive a first trigger signal; the master controller 103 is configured to: send the first trigger signal to the first one of the first slave controllers 101 through the first trigger signal line 120; the n-th first slave controller 101 is configured to: send the first trigger signal to the (n+1)-th first slave controller through the first trigger signal line 120, after confirming that the coding of the n-th first slave controller 101 and the coding of the n-th second slave controller 102 are completed. In this case, it only needs to configure the first trigger signal line for the first slave controller 101, and there is no need to configure first trigger signal lines for the m second slave controllers 102, which saves coding harness additionally configured for the second slave controller 102, and meanwhile saves coding nodes. Moreover, the master controller 103 only needs a coding interface connected to the first one of the first slave controllers 101, and does not need to configure coding interfaces connected to the second slave controller 102 and the other first slave controllers 101, which saves the coding interfaces.

For another example, the master controller 103 and the m-th first slave controller 101 may also be connected through the first trigger signal line 120, and the m-th first slave controller 101 is configured to: send the first trigger signal to the master controller 103 through the first trigger signal line 120 after confirming that the coding of the m-th first slave controller 101 and the coding of the m-th second slave controller 102 are completed.

In this embodiment, the master controller 103 can trigger the starting of the whole coding program by only sending the first trigger signal to the first one of the first slave controllers 101, and then after the coding of each first slave controller 101 is completed, the coding program of the next first slave controller 101 can be sequentially triggered, until the master controller 103 receives the first trigger signal sent by the m-th first slave controller 101. In this case, it can be confirmed that the coding of all the slave controllers is completed, and the coding can be ended.

In some embodiments, the master controller 103 is connected to the first slave controllers 101 through a communication line; the master controller 103 is further configured to send a coding start instruction to all the first slave controllers 101 through the communication line before sending the first trigger signal, to control the first slave controllers to 101 enter a silent state.

Exemplarily, the communication line is a CAN network communication line. The coding start instruction may be an instruction sent by the master controller 103 to the first slave controllers 101 through CAN network communication, and all the first slave controllers 101 may enter the silent state after receiving the instruction. The 'silent state' refers to a state of being unable to receive and/or respond to code information. For example, in the silent state, the first slave controller 101 cannot receive the code information sent through CAN network communication, or cannot respond to the code information sent through CAN network communication for coding, and then, when the first trigger signal is received, the first slave controller 101 exits the silent state, so that the coding operation can be performed on the first slave controller 101.

In these embodiments, all the first slave controllers 101 are controlled to enter the silent state at the initial stage of coding, so that the first slave controllers 101 cannot receive coding-related signals and perform coding operations. In this way, the first slave controller 101 can be controlled by the first trigger signal to start the coding operation. In addition, each first slave controller 101, after completing the coding, can trigger the next first slave controller 101 to start the coding operation, so that the plurality of first slave controllers 101 can be sequentially triggered and coded, and then the plurality of first slave controllers 101 can be prevented from being in a codable state at the same time, resulting in code confusion.

In some embodiments, the plurality of first slave controllers 101 are further configured to send a third trigger signal to the plurality of second slave controllers 102 through the second trigger signal lines 110 in response to receiving the coding start instruction, so that the second slave controllers 102 cannot be coded.

In these embodiments, all the second slave controllers 102 are controlled to be unable to receive coding-related signals and perform coding operations at the initial stage of coding, so that each second slave controller 102 can be sequentially controlled to be coded through the second trigger signal, and then the plurality of second slave controllers 102 can be prevented from being in a codable state at the same time, resulting in code confusion.

In some embodiments, the first slave controller 101 is further configured to: send a third trigger signal to the corresponding second slave controller 102 through the second trigger signal line 110 in response to the completion of the coding of the second slave controller 102, so that the second slave controller 102 cannot be coded.

In these embodiments, each second slave controller 102, after completing the coding, is controlled and cannot be coded, so that after the next second slave controller 102 is triggered by the second trigger signal 101, only this second slave controller 102 is in a codable state, thereby ensuring that only one second slave controller 102 is in the codable state under the control of the first trigger signal every time, and avoiding the confusion of code information of the different second slave controllers 102.

In some embodiments, the first slave controller 101 is further configured to send a first coding request instruction to the master controller 103 in response to receiving the first trigger signal, the first coding request instruction including an existing code of the first slave controller 101; the master controller 103 is configured to confirm whether the existing code in the first coding request instruction is consistent with a code currently configured for the first slave controller 101 in response to receiving the first coding request instruction sent by the first slave controller 101, and send a code confirmation instruction to the first slave controller 101 in response to the consistency between the existing code and the currently configured code; the first slave controller 101 is further configured to determine the existing code as the code of the first slave controller 101 in response to receiving the code confirmation instruction.

The existing code may be a code preset by the first slave controller 101 before leaving the factory, or a code stored in a previous coding process.

The code currently configured for the first slave controller 101 may be equal to a current coding count plus 1, for example, when coding the first one of the first slave controllers 101, the coding count is 0, and a code configured for the first one of the first slave controllers 101 may be 1; when coding the second one of the first slave controllers 101, the coding count is 1, and a code configured for the second one of the first slave controllers 101 may be 2. Certainly, the setting form of the code currently configured for the first slave controller 101 is not limited thereto, and can be set as required during actual configuration.

In the above coding method, the first slave controller 101 first actively sends the existing code to the master controller 103 for confirmation, and the master controller 103 confirms whether the existing code is consistent with the currently configured code, and if the codes are consistent, the master controller 103 no longer sends a code information instruction to endow the first slave controller 101 with a code, and can directly send the code confirmation instruction to the first slave controller 101, which saves procedures. Moreover, by comparing and verifying whether the existing code is consistent with the currently configured code, a code error can be avoided.

In some embodiments, the master controller 103 is configured to send the code currently configured for the first slave controller 101 to the first slave controller 101 in response to the inconsistency between the existing code and the currently configured code; the first slave controller 101 is further configured to send a second coding request instruction to the master controller 103 in response to receiving the code currently configured for the first slave controller 101, the second coding request instruction including the code currently configured for the first slave controller 101.

If the master controller 103 confirms that the existing code information is inconsistent with the currently configured code, the master controller 103 directly sends the currently configured code to the first slave controller 101, the first slave controller 101 stores the currently configured code and overwrites the original existing code, and then sends the coding request instruction (equivalent to the second coding request instruction) to the master controller 103 once again, until the code confirmation instruction sent by the master controller 103 is received, and it confirms that the coding is successful. In this way, by repeatedly sending the coding request instruction to the master controller 103 to confirm the code, the probability of a code error can be reduced and the accuracy of the code can be ensured.

In addition, the coding request instruction sent by the first slave controller 101 may further include a verification code, and the master controller 103 may also confirm whether the first slave controller 101 is in a state to be coded by matching the verification code.

For example, after each first slave controller 101 is coded, the master controller 103 adds 1 to the coding count, and the first slave controller 101 that has not yet coded also adds 1 to the coding count as the own verification code, so the verification code of the first coded first slave controller 101 is 0, the verification code of the second coded first slave controller 101 is 1, and so on, and the verification code of the last coded first slave controller 101 is m. After each first slave controller 101 receives the first trigger signal, the coding request instruction sent to the master controller 103 includes the verification code of the first slave controller 101, the master controller 103 compares the verification code with its own real-time coding count, if the two are consistent, the step of confirming the existing code is executed, and if the two are inconsistent, the coding process can be ended. In this way, it can be confirmed whether the first slave controller 101 currently requesting to be coded is in the state to be coded, thereby avoiding the situations of a code error such as code duplication.

In some embodiments, when the first slave controller 101 is configured to code the second controller 102 in response to the completion of the coding of the first slave controller 101, the first slave controller 101 may be configured to: send a third coding instruction to the corresponding second slave controller 102 in response to receiving the code confirmation instruction sent by the master controller 103, wherein the third coding instruction includes a code configured for the second slave controller 102, and the third coding instruction can cause the second controller 102 to perform the coding operation.

For example, the first slave controller 101 may send the third coding instruction to the second slave controller 102 through CAN network communication.

The third coding instruction is sent to the second slave controller 102 after the coding of the first slave controller 101 is completed. In this case, since only one second slave controller 102 (the second slave controller 102 corresponding to the first slave controller 101 which completes the coding) is in a codable state, only this second slave controller 102 can be coded in response to the third coding instruction, and code duplication of the different second slave controllers 102 can be avoided.

In some embodiments, the second slave controller 102 is configured to store a code configured for the second slave controller 102 in the third coding instruction in response to receiving the third coding instruction, and send feedback information to the corresponding first slave controller 101, the feedback information including a code currently stored by the second slave controller 102. The first slave controller 101 is configured to determine whether the code currently stored by the second slave controller 102 is consistent with the code configured for the second slave controller 102 in response to receiving the feedback information, and confirm that the coding of the second slave controller 102 is completed in response to determining that the code currently stored by the second slave controller 102 is consistent with the code configured for the second slave controller 102. In this way, by comparing and verifying, a code error is able to be avoided.

In some embodiments, in response to the inconsistency between the code currently stored by the second slave controller 102 and the code configured for the second slave controller 102, the first slave controller 101 can send the third coding instruction to the second slave controller 102 once again, until the code currently stored in the feedback information from the second slave controller 102 is consistent with the code configured for the second slave controller 102.

In some embodiments, the master controller 103 is further configured to: add 1 to the coding count after sending the code confirmation instruction to the first slave controller 101, and confirm whether the coding count is greater than or equal to the number of the first slave controllers 101; and in response to the coding count greater than or equal to the number of the first slave controllers 101, send a coding exit instruction to the first slave controller 101 through the first trigger signal line 110 and end the coding process.

In some embodiments, the master controller 103 is further configured to wait to receive coding request information sent by the next first slave controller 101 and execute coding steps of the next first slave controller 101 in response to the coding count less than the number of the first slave controllers 101.

These embodiments can judge whether the coding of all the first slave controllers 101 is completed by confirming the coding count, continue to code the next first slave controller 101 if the coding is not completed, and end the coding if so.

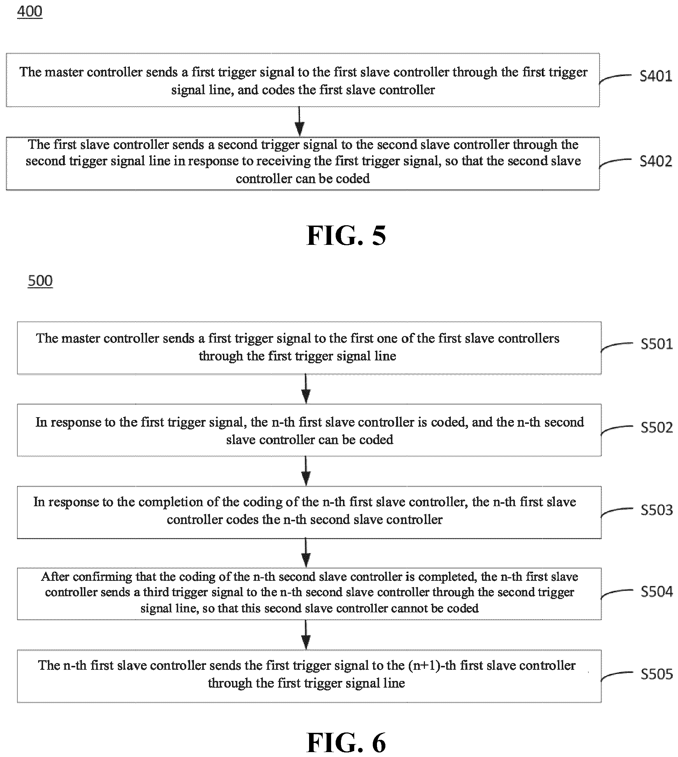

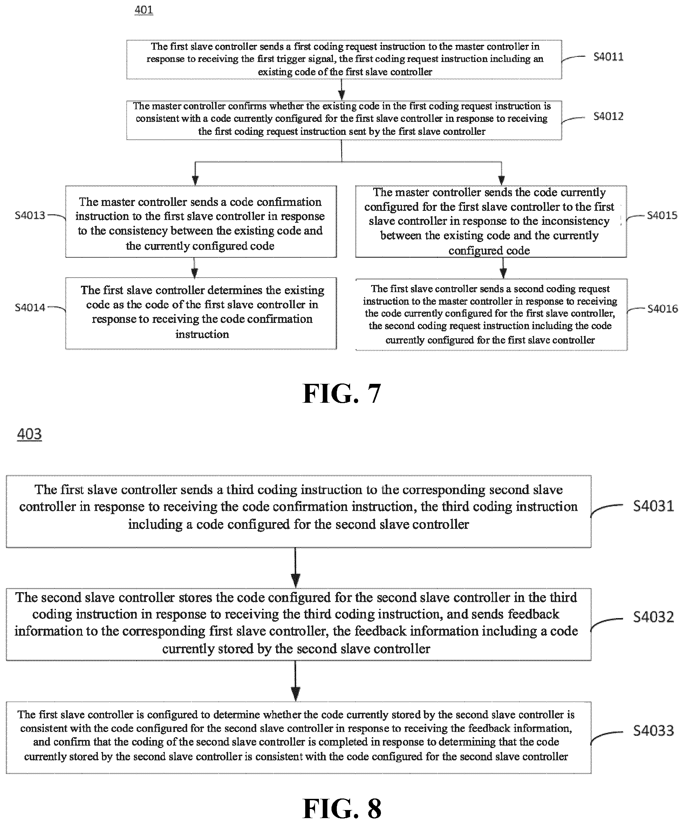

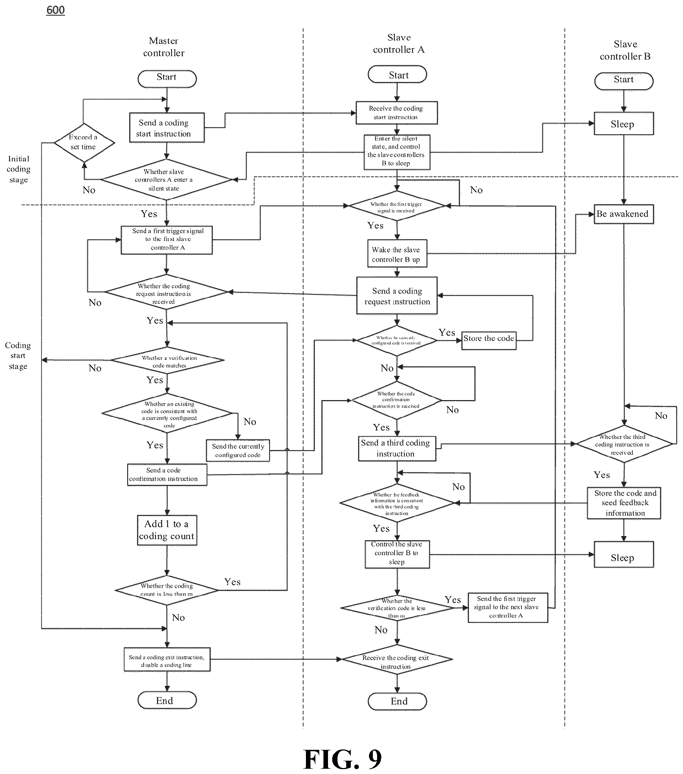

Some embodiments in a third aspect of the present disclosure provide a coding method of a multi-controller system, as shown in Fig. 5, which is a flowchart of a coding method 400 of a multi-controller system provided by some embodiments of the present disclosure, as shown in Fig. 6, which is a flowchart of a coding method 500 of a multi-controller system provided by other embodiments of the present disclosure, as shown in Fig. 7, which is a flowchart of step S401 in a coding method of a multi-controller system provided by some embodiments of the present disclosure, as shown in Fig. 8, which is a flowchart of step S403 in a coding method of a multi-controller system provided by some embodiments of the present disclosure, and as shown in Fig. 9, which is a logical flowchart of a coding method 600 of a multi-controller system according to some embodiments of the present disclosure.

As shown in Fig. 1 and Fig. 2, the multi-controller system 100 includes a master controller 103, a first slave controller 101 and a second slave controller 102, the master controller 103 being connected to the first slave controllers 101 through a first trigger signal line 120, the first slave controller 101 and the second slave controller 102 being connected through a second trigger signal line 110. As shown in Fig. 5, the coding method of the multi-controller system provided by some embodiments of the present disclosure includes: S401, the master controller 103 sends a first trigger signal to the first slave controller 101 through the first trigger signal line 120, and codes the first slave controller 101; S402, the first slave controller 101 sends a second trigger signal to the second slave controller 102 through the second trigger signal line 110 in response to receiving the first trigger signal, so that the second slave controller 102 can be coded.

According to the coding method of the multi-controller system provided by the embodiments of the present application, on the one hand, the coding of the slave controllers is performed after the multi-controller system is assembled and powered on, with no need to pre-code the slave controllers, which reduces the difficulty in production, transportation, after-sales and management of the slave controllers, and does not need to worry about the confusion of the slave controllers during transportation and installation; on the other hand, after the first slave controller 101 receives the first trigger signal, the first slave controller 101 sends the second trigger signal to the second slave controller 102 using the second trigger signal line 110 between the first slave controller 101 and the second slave controller 102, so that the second slave controller 102 can be coded, which saves coding interfaces and coding harness additionally configured for the second slave controller 102, reduces the number of nodes for coding control, improves the robustness of a whole coding system, and improves the reliability of the system.

In addition, according to some examples of the multi-controller system provided by the embodiments of the present disclosure and the beneficial effects that can be brought about, the coding method of the multi-controller system provided by the embodiments of the present disclosure also has the same or similar embodiments and beneficial effects, which will not be repeated here.

The coding method of the multi-controller system provided by the embodiments of the present disclosure are illustrated below.

In some embodiments, the coding method of the present disclosure further includes: S403, the first slave controller 101 or the master controller 103 codes the second slave controller 102 in response to the completion of the coding of the first slave controller 101.

The first slave controller 101 starts coding after receiving a coding trigger instruction, so that the second slave controller 102 can be coded through the second trigger signal line 110. Code information is sent to the second slave controller 102 after the coding of the first slave controller 101 is completed, and in this case, the second slave controller 102 is already in a codable state and can be coded in response to the code information.

In addition, the first slave controller 101 is coded via the master controller 103, and then the second slave controller 102 is coded after the coding of the first slave controller 101 is completed, which can avoid a code error and save procedures. For example, if the coding of the first slave controller 101 fails, the second slave controller 102 will not be coded, and in this case, the coding may be directly ended or may be restarted. In this way, the second slave controller 102 can be avoided from being mistakenly coded by the first slave controller 101, and the procedures are saved.

In some embodiments, the multi-controller system includes a plurality of first slave controllers 101 and a plurality of second slave controllers 102, the plurality of first slave controllers 101 and the plurality of second slave controllers 102 being in one-to-one correspondence, and the first slave controllers 101 and the second slave controllers 102 in one-to-one correspondence being connected through the second trigger signal lines 110. The master controller 103 is connected to one first slave controller 101 of the plurality of first slave controllers 101 through the first trigger signal line 120, and the other first slave controllers 101 are sequentially connected in series to the one first slave controller 101 through the first trigger signal line 120.

In some embodiments, the coding method of the present disclosure further includes: the master controller 103 sends a first trigger signal to the one first slave controller 101 connected thereto through the first trigger signal line 120; and the first slave controller 101 sends the first trigger signal to the next first slave controller 101 connected in series thereto in response to the completion of the coding of the corresponding second slave controller 102.

In these embodiments, the master controller 103 can trigger the starting of a whole coding program by only sending the first trigger signal to one first slave controller 101, and then after the coding of each first slave controller 101 is completed, the coding program of the next first slave controller 101 connected thereto can be sequentially triggered, so that the plurality of first slave controllers 101 can be coded in sequence. This coding control method saves the coding harness and the coding interfaces of the master controller 103, reduces the number of nodes for coding control, improves the reliability of the system, and makes the configurations of all the first slave controllers 101 more consistent, which is convenient for preparation, transportation and assembly of the first slave controllers 101.

In some embodiments, the coding method of the multi-controller system method further includes: the first slave controller 101 sends a third trigger signal to the corresponding second slave controller 102 through the second trigger signal line 110 in response to the completion of the coding of the second slave controller 102, so that the second slave controller 102 cannot be coded.

In these embodiments, each second slave controller 102, after completing the coding, is controlled and cannot be coded, so that after the next second slave controller 102 is triggered by the second trigger signal, only this second slave controller 102 is in a codable state, thereby ensuring that only one second slave controller 102 is in the codable state under the control of the first trigger signal every time, and avoiding the confusion of code information of the different second slave controllers 102.

In some embodiments, the coding method of the present disclosure further includes: the first slave controller 101 confirms whether an own verification code is less than the number of the first slave controllers 101 in response to the completion of the coding of the corresponding second slave controller 102, and sends the first trigger signal to the next first slave controller 101 connected thereto in response to the own verification code less than the number of the first slave controllers 101.

In these embodiments, after coding the second slave controller 102, each first slave controller 101 verifies the own verification code to confirm whether it is the last first slave controller 101 to perform coding, so as to determine whether to continue to send the first trigger signal to the next first slave controller 101; if the own verification code is less than the number of the first slave controllers 101, it means that the current first slave controller 101 is not the last first slave controller 101 to perform coding, and the first slave controller 101 will continue to send the first trigger signal to the next first slave controller 101.

In some embodiments, the first slave controller 101 ends the coding process in response to the own verification code greater than or equal to the number of the first slave controllers 101. If the own verification code is greater than or equal to the number of the first slave controllers 101, it means that the current first slave controller 101 is the last first slave controller 101 to perform coding, and the process can be ended, which saves procedures.

For example, a multi-controller system includes a master controller 103, m first slave controllers 101 and m second slave controllers 102, wherein m is greater than or equal to 2; the first slave controllers 101 and the second slave controllers 102 are in one-to-one correspondence, and the first slave controllers 101 and the second slave controllers 102 corresponding to each other are connected through second trigger signal lines 110, wherein the master controller 103 and the first one of the first slave controllers 101 as well as the n-th first slave controller 101 and the (n+1)-th first slave controller 101 are connected through first trigger signal lines 120, wherein n is less than or equal to m-1 and greater than or equal to 1.

In some embodiments, as shown in Fig. 6, the coding method 500 of the multi-controller system includes: S501, the master controller 103 sends a first trigger signal to the first one of the first slave controllers 101 through the first trigger signal line 120; S502, in response to the first trigger signal, the n-th first slave controller 101 is coded, and the n-th second slave controller 102 can be coded; S503, in response to the completion of the coding of the n-th first slave controller 101, the n-th first slave controller 101 codes the n-th second slave controller 102; S504, after confirming that the coding of the n-th second slave controller 102 is completed, the n-th first slave controller 101 sends a third trigger signal to the n-th second slave controller 102 through the second trigger signal line 110, so that this second slave controller 102 cannot be coded; S505, the n-th first slave controller 101 sends the first trigger signal to the (n+1)-th first slave controller 101 through the first trigger signal line 120.

For another example, the master controller 103 and the m-th first slave controller 101 may also be connected through the first trigger signal line 120, and the coding method of the multi-controller system may further include: the m-th first slave controller 101 sends the first trigger signal to the master controller 103 through the first trigger signal line 120 after confirming that the coding of the m-th first slave controller 101 and the coding of the m-th second slave controller 102 are completed.

In this embodiment, the master controller 103 can trigger the starting of the whole coding program by only sending the first trigger signal to the first one of the first slave controllers 101, and then after the coding of each first slave controller 101 is completed, the coding program of the next first slave controller 101 can be sequentially triggered, until the master controller 103 receives the first trigger signal sent by the m-th first slave controller 101. In this case, it can be confirmed that the coding of all the slave controllers is completed, and the coding can be ended. This coding control mode saves the first trigger signal wiring harness and the coding interfaces of the master controller 103, which reduces the number of nodes for coding control, and improves the reliability of the system.

In some embodiments, the coding method of the multi-controller system further includes: the master controller 103 sends a coding start instruction to all the first slave controllers 101 through a communication line before sending the first trigger signal, so as to control the first slave controllers 101 to enter a silent state.

In these embodiments, all the first slave controllers 101 are controlled to enter the silent state at the initial stage of coding, so that the first slave controllers 101 cannot receive coding-related signals and perform coding operations. In this way, the first slave controller 101 can be controlled by the first trigger signal to start the coding operation. In addition, each first slave controller 101, after completing the coding, can trigger the next first slave controller 101 to start the coding operation, so that the plurality of first slave controllers 101 can be sequentially triggered and coded, and then the plurality of first slave controllers 101 can be prevented from being in a codable state at the same time, resulting in code confusion.

In some embodiments, the coding method of the multi-controller system further includes: the plurality of first slave controllers 101 send a third trigger signal to the plurality of second slave controllers 102 through the second trigger signal lines 110 in response to receiving the coding start instruction, so that the second slave controllers 102 cannot be coded.

In these embodiments, all the second slave controllers 102 are controlled to be unable to receive coding-related signals and perform coding operations at the initial stage of coding, so that each second slave controller 102 can be sequentially controlled through the second trigger signal to be coded, and then the plurality of second slave controllers 102 can be prevented from being in a codable state at the same time, resulting in code confusion.

In some embodiments, S401, the master controller 103 sends a first trigger signal to the first slave controller 101 through the first trigger signal line 120, and codes the first slave controller 101, which includes the following steps: as shown in Fig. 7, S4011, the first slave controller 101 sends a first coding request instruction to the master controller 103 in response to receiving the first trigger signal, the first coding request instruction including an existing code of the first slave controller 101; S4012, the master controller 103 confirms whether the existing code in the first coding request instruction is consistent with a code currently configured for the first slave controller 101 in response to receiving the first coding request instruction sent by the first slave controller 101; S4013, the master controller 103 sends a code confirmation instruction to the first slave controller 101 in response to the consistency between the existing code and the currently configured code; and S4014, the first slave controller 101 determines the existing code as the code of the first slave controller 101 in response to receiving the code confirmation instruction.

**In** the above coding method, the first slave controller 101 first actively sends the existing code to the master controller 103 for confirmation, and the master controller 103 confirms whether the existing code is consistent with the currently configured code, and if the codes are consistent, the master controller 103 no longer sends a code information instruction to endow the first slave controller 101 with a code, and can directly send the code confirmation instruction to the first slave controller 101, which saves procedures. Moreover, by comparing and verifying the existing code and the currently configured code, a code error can be avoided.

**In** some embodiments, S401 further includes the following steps, as shown in Fig. 7: S4015, the master controller 103 sends the code currently configured for the first slave controller 101 to the first slave controller 101 in response to the inconsistency between the existing code and the currently configured code; and S4016, the first slave controller 101 sends a second coding request instruction to the master controller 103 in response to receiving the code currently configured for the first slave controller 101, the second coding request instruction including the code currently configured for the first slave controller 101.

If the master controller 103 confirms that the existing code information is inconsistent with the currently configured code, the master controller 103 directly sends the currently configured code to the first slave controller 101, the first slave controller 101 stores the currently configured code and overwrites the original existing code, and then sends the coding request instruction (equivalent to the second coding request instruction) to the master controller 103 once again, until the code confirmation instruction sent by the master controller 103 is received, and it confirms that the coding is successful. In this way, by repeatedly sending the coding request instruction to the master controller 103 to confirm the code, the probability of a code error can be reduced and the accuracy of the code can be ensured.

In some embodiments, the step S403 specifically includes: the first slave controller 101 codes the second slave controller 102 in response to the completion of the coding of the first slave controller 101.

Exemplarily, S403 includes the following steps, as shown in FIG. 8: S4031, the first slave controller 101 sends a third coding instruction to the corresponding second slave controller 102 in response to receiving the code confirmation instruction, the third coding instruction including a code configured for the second slave controller 102.

The first slave controller 101, after completing the coding, sends the third coding instruction to the second slave controller 102. In this case, since only one second slave controller 102 (the second slave controller 102 corresponding to the first slave controller 101 which completes the coding) is in a codable state, only this second slave controller 102 can be coded in response to the third coding instruction.

In some embodiments, S403 further includes the following steps, as shown in Fig. 8: S4032, the second slave controller 102 stores the code configured for the second slave controller 102 in the third coding instruction in response to receiving the third coding instruction, and sends feedback information to the corresponding first slave controller 101, the feedback information including a code currently stored by the second slave controller 102; and S4033, the first slave controller 101 is configured to determine whether the code currently stored by the second slave controller 102 is consistent with the code configured for the second slave controller 102 in response to receiving the feedback information, and confirm that the coding of the second slave controller 102 is completed in response to determining that the code currently stored by the second slave controller 102 is consistent with the code configured for the second slave controller 102. In this way, by comparing and verifying, a code error is able to be avoided.

In some embodiments, the coding method of the multi-controller system further includes: the master controller 103 adds 1 to a coding count after sending the code confirmation instruction to the first slave controller 101 and determines whether the coding count is greater than or equal to the number of the first slave controllers 101, and, in response to the coding count greater than or equal to the number of the first slave controllers 101, sends a coding exit instruction to the first slave controller 101 through the first trigger signal line 110 and ends the coding process.

In some embodiments, the coding method of the multi-controller system further includes: the master controller 103 waits to receive coding request information sent by the next first slave controller 101 and executes coding steps of the next first slave controller 101 in response to the coding count less than the number of the first slave controllers 101.

These embodiments are able to judge whether the coding of all the first slave controllers is completed by confirming the coding count, continue to code the next first slave controller if the coding is not completed, and end the coding if so.

In some embodiments, the second trigger signal line 110 is a wake-up line, and the second trigger signal is a wake-up signal. In step S402, in response to the second trigger signal, the second controller 102 is awaken and can receive a coding-related signal to perform coding.

Exemplarily, the third trigger signal is a sleep signal, and in response to the third trigger signal, the second controller 102 enters a sleep state and cannot receive a coding-related signal to perform coding.

In another some embodiments, the second trigger signal line 110 is a power-on line, and the second trigger signal is a power-on signal. In step S402, in response to the second trigger signal, the second controller 102 is powered on and can receive a coding-related signal to perform coding.

Correspondingly, the third trigger signal may be a power-off signal, and in response to the third trigger signal, the second controller 102 is powered off and cannot receive a coding-related signal to perform coding.

In some other embodiments, the second trigger signal line 110 is a coding line, and the second trigger signal is an enable signal, specifically enabling the second slave controller 102 to coded. In step S402, in response to the second trigger signal, the second controller 102 can receive a coding-related signal and perform coding.

Exemplarily, the third trigger signal is a disable signal, and in response to the third trigger signal, the second controller 102 cannot receive a coding-related signal to perform coding.

Fig. 9 is the flowchart 500 of the coding method of the multi-controller system provided by some other embodiments of the present disclosure, wherein slave controllers A are first slave controllers, slave controllers B are second slave controllers, the slave controllers A are connected to the slave controllers B through first trigger signal lines, and the first trigger signal lines are wake-up lines. As shown in Fig. 9, the coding method of the multi-controller system provided by the embodiments of the present disclosure includes the following stages and steps:
An initial coding stage:
   S1001, the master controller receives a coding start request, and sends a coding start instruction to all the slave controllers A through a CAN network.
   S1002, all the slave controllers A receive the coding start instruction to enter a silent state, and meanwhile control the corresponding slave controllers B to sleep.
   S1003, the master controller confirms whether all the slave controllers A enter the silent state, if all the slave controllers A enter the silent state within a set time (for example, 10 seconds), the following step S1004 is executed, and otherwise, the coding process is ended.

A coding start stage:
S1004, the master controller enables the first slave controller A and sends a first trigger signal to the first slave controller A through the first trigger signal line, after detecting the first trigger signal, the first slave controller A wakes the first slave controller B up through the wake-up line, and sends a coding request instruction (a first coding request instruction) to the master controller through CAN communication, the coding request instruction including a verification code and an existing code of the first slave controller A.
S1005, the master controller confirms whether the coding request instruction is received, if the coding request instruction is received, the following S1006 is executed, and otherwise, the first trigger signal is repeatedly sent to the first slave controller A until the coding request instruction is received.
S1006, the master controller confirms the verification code in the coding request instruction, if the verification code matches, the following S1007 is executed, and otherwise, the coding process is ended.
S1007, the master controller confirms whether an existing code in the coding request instruction is consistent with a code configured currently, if the codes are consistent, a code confirmation instruction is sent to the first slave controller A, and if the codes are inconsistent, the currently configured code is sent to the first slave controller A.
S1008, after receiving the currently configured code, the first slave controller A stores the code, and resends a coding request instruction (a second coding request instruction), and S1005-S1008 are executed repeatedly until the master controller sends the code confirmation instruction to the first slave controller A.
S1009, after sending the code confirmation instruction to the first slave controller A, the master controller adds 1 to a coding count; then, whether the coding count is less than the number m of the slave controllers A is confirmed, if the coding count is less than m, the operations of S1005 to S1009 are executed repeatedly to perform coding on the next slave controller A until it is confirmed that the coding count is greater than or equal to m, and then the coding is ended.
S1010, after receiving code confirmation information, the first slave controller A sends a third coding instruction to the slave controller B through CAN communication.
S1011, after receiving the third coding instruction, the first slave controller B in a wake-up state stores a code in the third coding instruction and feeds back code information thereof.
S1012, after receiving the code information fed back from the slave controller B, the first slave controller A confirms whether the code information is consistent with the code in the third coding instruction, and if the codes are consistent, the first slave controller B is controlled to sleep.
S1013, after controlling the first slave controller B to sleep, the first slave controller A confirms whether an own verification code is less than the number m of the slave controllers A, if the verification code is less than m, the first slave controller A enables the second slave controller A connected thereto through the first trigger signal line, and sends the first trigger signal to the second slave controller A through the first trigger signal line, so that the second slave controller A starts coding steps; and if the verification code is greater than or equal to m, the coding is ended.
S1014, starting from the second slave controller A, after receiving the coding instruction, each slave controller A and the corresponding slave controller B repeatedly execute the operations steps of the first slave controller A and the first slave controller B in S1004 to S1013, until the last slave controller A and the corresponding slave controller B complete the coding operations, and if the last slave controller A confirms that the verification code thereof is greater than or equal to m, the coding is ended.

In addition, before the end of the coding process, the master controller may also send a coding exit instruction to the slave controller A to disable the first trigger signal line, and the slave controller A confirms that the verification code thereof is greater than or equal to m, and ends and exits the coding after receiving the coding exit instruction.

Some embodiments in a fourth aspect of the present disclosure provide a control device, including a memory, a processor, and a program stored on the memory and operable on the processor, and when the processor executes the program, the coding method of a multi-controller system according to any one of the foregoing being implemented.

Various embodiments of the systems and techniques described above herein may be implemented in digital electronic circuit systems, integrated circuit systems, field programmable gate arrays (FPGA), application specific integrated circuits (ASIC), application specific standard products (ASSP), system-on-a-chip (SOC) systems, load programmable logic devices (CPLD), computer hardware, firmware, software, and/or combinations thereof. These various embodiments may include: being implemented in one or more computer programs that may be executed and/or interpreted on a programmable system including at least one programmable processor, the programmable processor may be a special-purpose or general-purpose programmable processor that can receive data and instructions from a storage system, at least one input apparatus, and at least one output apparatus, and transmit the data and instructions to the storage system, the at least one input apparatus, and the at least one output apparatus.

Some embodiments in a fifth aspect of the present disclosure provide a computer-readable storage medium on which a computer program is stored, wherein when the computer program is executed by the processor, the coding method of a multi-controller system according to any one of the foregoing is implemented.

The computer-readable medium may be a tangible medium that may contain or store a program for use by or in conjunction with an instruction execution system, apparatus, or device. The machine-readable medium may be a machine-readable signal medium or a machine-readable storage medium. The computer-readable storage medium may include, for example, but is not limited to, an electronic, magnetic, optical, electromagnetic, infrared, or semiconductor system, apparatus, or device, or any suitable combination of the above. More specific examples of the machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

Some embodiments in a sixth aspect of the present disclosure provides a computer program product, including a computer program, wherein when the computer program is executed by a processor, a coding method of a multi-controller system according to any one of the foregoing is implemented.

Program codes for implementing the method of the present disclosure may be written in any combination of one or more programming languages. These program codes may be provided to a processor or controller of a general-purpose computer, a special-purpose computer, or other programmable data processing devices, so that the program codes, when executed by the processor or controller, cause the functions/operations specified in the flowcharts and/or block diagrams to be implemented.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. **In** particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A multi-controller system, the multi-controller system comprising a master controller, a first slave controller and a second slave controller, the master controller being connected to the first slave controller through a first trigger signal line, and the first slave controller and the second slave controller being connected to each other through a second trigger signal line, wherein:
the master controller is configured to: send a first trigger signal to the first slave controller through the first trigger signal line to allow the first slave controller to be coded, and code the first slave controller; and
the first slave controller is configured to send a second trigger signal to the second slave controller through the second trigger signal line, in response to receiving the first trigger signal, to allow the second slave controller to be coded.

2. The multi-controller system according to claim 1, wherein the first slave controller or the master controller is further configured to code the second slave controller in response to completion of coding of the first slave controller.

3. The multi-controller system according to any one of claims 1 to 2, wherein:
the multi-controller system comprises a plurality of first slave controllers and a plurality of second slave controllers;
the plurality of first slave controllers and the plurality of second slave controllers are in one-to-one correspondence; and
the first slave controllers and the second slave controllers in one-to-one correspondence are connected through second trigger signal lines.

4. The multi-controller system according to claim 3, wherein the plurality of first slave controllers are further configured to send a third trigger signal to the plurality of slave controllers through the second trigger signal lines, in response to receiving a coding start instruction, to disallow the second slave controllers to be coded.

5. The multi-controller system according to claim 3 or 4, wherein:
the master controller is connected to one of the first slave controllers through a first trigger signal line, and other first slave controllers are sequentially connected in series to the one first slave controller through first trigger signal lines;
the master controller is further configured to send a first trigger signal to the one first slave controller through the first trigger signal line; and
the first slave controller is further configured to send the first trigger signal to a next first slave controller connected in series thereto in response to completion of the coding of its corresponding second slave controller.

6. The multi-controller system according to any one of claims 1-5, wherein:
the master controller is connected to the first slave controller through a communication line; and
the master controller is further configured to send a coding start instruction to the first slave controller through the communication line before sending the first trigger signal, so as to control the first slave controller to enter a silent state.

7. The multi-controller system according to any one of claims 1-6, wherein:
the first slave controller is further configured to send a third trigger signal to its corresponding second slave controller through the second trigger signal line, in response to completion of the coding of the second slave controller, to disallow the second slave controller to be coded.

8. The multi-controller system according to any one of claims 1-7, wherein:
the first slave controller is further configured to send a first coding request instruction to the master controller in response to receiving the first trigger signal, the first coding request instruction comprising an existing code of the first slave controller;
the master controller is configured to: confirm whether the existing code in the first coding request instruction is consistent with a currently configured code for the first slave controller, in response to receiving the first coding request instruction, and send a code confirmation instruction to the first slave controller in response to confirmation of consistency between the existing code and the currently configured code; and
the first slave controller is further configured to determine the existing code as a code for the first slave controller in response to receiving the code confirmation instruction.

9. The multi-controller system according to claim 8, wherein:
the master controller is configured to send the currently configured code for the first slave controller to the first slave controller in response to inconsistency between the existing code and the currently configured code; and
the first slave controller is further configured to send a second coding request instruction to the master controller in response to receiving the currently configured code for the first slave controller, the second coding request instruction comprising the currently configured code for the first slave controller.

10. The multi-controller system according to claim 8 or 9, wherein the first slave controller is further configured to send a third coding instruction to its corresponding second slave controller in response to receiving the code confirmation instruction, the third coding instruction comprising a code configured for the second slave controller.

11. The multi-controller system according to claim 10, wherein:
the second slave controller is configured to: in response to receiving the third coding instruction, store the code configured for the second slave controller, and send feedback information to its corresponding first slave controller, the feedback information comprising a code currently stored by the second slave controller; and
the first slave controller is configured to: determine whether the code currently stored by the second slave controller is consistent with the code configured for the second slave controller in response to receiving the feedback information, and confirm that the coding of the second slave controller is completed in response to determining that the code currently stored by the second slave controller is consistent with the code configured for the second slave controller.

12. The multi-controller system according to any one of claims 8-11, wherein the master controller is further configured to:
add 1 to a coding count after sending the code confirmation instruction to the first slave controller;
confirm whether the coding count is greater than or equal to the number of the first slave controllers; and
in response to the coding count being greater than or equal to the number of the first slave controllers, send a coding exit instruction to the first slave controller through the first trigger signal line, and end the coding process.

13. The multi-controller system according to any one of claims 1-12, wherein the multi-controller system is a battery management system.

14. The multi-controller system according to claim 13, wherein:
the first slave controller is a branch battery management system; and
the second slave controller is a balance controller.

15. An electrical apparatus, comprising a battery and the multi-controller system according to any one of claims 1-14, the battery being used to provide electrical energy, and the multi-controller system being used to control and manage the battery.

16. A coding method of a multi-controller system, the multi-controller system comprising a master controller, a first slave controller and a second slave controller, the master controller being connected to the first slave controller through a first trigger signal line, and the first slave controller and the second slave controller being connected to each other through a second trigger signal line, wherein the method comprises:
sending, by the master controller, a first trigger signal to the first slave controller through the first trigger signal line, and coding the first slave controller; and
sending, by the first slave controller, a second trigger signal to the second slave controller through the second trigger signal line, in response to receiving the first trigger signal through the first trigger signal line, to allow the second slave controller to be coded.

17. The coding method of a multi-controller system according to claim 16, wherein the method further comprises:
coding the second controller by the first slave controller or the master controller in response to completion of the coding of the first slave controller.

18. The coding method of a multi-controller system according to any one of claim 16 or 17, wherein the multi-controller system comprises a plurality of first slave controllers and a plurality of second slave controllers, the plurality of first slave controllers and the plurality of second slave controllers are in one-to-one correspondence, and the first slave controllers and the second slave controllers in one-to-one correspondence are connected through second trigger signal lines, the method further comprising:
sending, by the plurality of first slave controllers, a third trigger signal to the plurality of second slave controllers through the second trigger signal lines in response to receiving a coding start instruction, to disallow the second slave controllers to be coded.

19. The coding method of a multi-controller system according to claim 18, wherein the master controller is connected to one of the first slave controllers through a first trigger signal line, and other first slave controllers are connected in series to the one first slave controller through first trigger signal lines, the method further comprising:
sending, by the master controller, a first trigger signal to the one first slave controller through the first trigger signal line; and
sending, by the first slave controller, the first trigger signal to a next first slave controller connected in series thereto in response to completion of the coding of its corresponding second slave controller.

20. The coding method of a multi-controller system according to any one of claims 16-19, wherein the master controller and the first slave controller are connected to each other through a signal line, the method further comprising:
sending, by the master controller, a coding start instruction to the first controller through the signal line before sending the first trigger signal, so as to control the first controller to enter a silent state.

21. The coding method of a multi-controller system according to any one of claims 16-20, wherein the method further comprises:
sending, by the first slave controller, a third trigger signal to its corresponding second slave controller through the second trigger signal line, in response to completion of the coding of the second slave controller, to disallow the second slave controller to be coded.

22. The coding method of a multi-controller system according to any one of claims 16-21, wherein the sending, by the master controller, a first trigger signal to the first slave controller through the first trigger signal line, and coding the first slave controller comprises the following steps:
sending, by the first slave controller, a first coding request instruction to the master controller in response to receiving the first trigger signal, the first coding request instruction comprising an existing code of the first slave controller;
confirming, by the master controller, whether the existing code in the first coding request instruction is consistent with a currently configured code for the first slave controller in response to receiving the first coding request instruction, and sending a code confirmation instruction to the first slave controller in response to confirmation of consistency between the existing code and the currently configured code; and
determining, by the first slave controller, the existing code as a code for the first slave controller in response to receiving the code confirmation instruction.

23. The coding method of a multi-controller system according to claim 22, wherein the sending, by the master controller, a first trigger signal to the first slave controller through the first trigger signal line, and coding the first slave controller further comprises the following steps:
sending, by the master controller, the currently configured code for the first slave controller to the first slave controller in response to inconsistency between the existing code and the currently configured code; and
sending, by the first slave controller, a second coding request instruction to the master controller in response to receiving the currently configured code for the first slave controller, the second coding request instruction comprising the currently configured code for the first slave controller.

24. The coding method of a multi-controller system according to claim 22 or 23, wherein
the coding the second controller by the first slave controller in response to completion of the coding of the first slave controller comprises the following steps:
sending, by the first slave controller, a third coding instruction to its corresponding second slave controller in response to receiving the code confirmation instruction, the third coding instruction comprising a code configured for the second slave controller.

25. The coding method of a multi-controller system according to claim 24, wherein
the coding the second controller by the first slave controller in response to completion of the coding of the first slave controller further comprises the following steps:
in response to receiving the third coding instruction, storing, by the second slave controller, the code configured for the second slave controller, and sending feedback information to its corresponding first slave controller, the feedback information comprising a code currently stored by the second slave controller; and
determining, by the first slave controller, whether the code currently stored by the second slave controller is consistent with the code configured for the second slave controller in response to receiving the feedback information, and confirming that the coding of the second slave controller is completed in response to determining that the code currently stored by the second slave controller is consistent with the code configured for the second slave controller.

26. The coding method of a multi-controller system according to any one of claim 22-25, wherein the method further comprises:
adding, by the master controller, 1 to a coding count after sending code confirmation information to the first slave controller, and confirming whether the coding count is greater than or equal to the number of the first slave controllers; and in response to the coding count being greater than or equal to the number of the first slave controllers, sending a coding exit instruction to the first slave controller through the first trigger signal line, and ending the coding process.

27. A control device, the control device comprising a memory, a processor, and a program stored on the memory and operable on the processor, and when the processor executes the program, the coding method of a multi-controller system according to any one of the claims 16-26 being implemented.

28. A computer-readable storage medium on which a computer program is stored, wherein the computer program, when executed by a processor, implements the coding method of a multi-controller system according to any one of claims 16-26.

29. A computer program product, the computer program product comprising a computer program, wherein when the computer program is executed by a processor, the method according to any one of claims 16-26 is implemented.
